# EUROPEAN PATENT APPLICATION

(11) **EP 4 090 016 A2**
(43) Date of publication of application: **16.11.2022**
(21) Application number: 22172278.8
(22) Date of filing: 09.05.2022
(51) Int. Cl.: H04N 19/115, H04N 19/132, H04N 19/154, H04N 19/162, H04N 19/172

(54) **APPARATUS, METHOD AND PROGRAM**

(30) Priority: 12.05.2021 JP 2021080964
(71) Applicant: Yokogawa Electric Corporation, Musashino-shi, Tokyo 180-8750 (JP)
(72) Inventor: Kojima, Osamu, Tokyo, 180-8750 (JP); Naraoka, Jun, Tokyo, 180-8750 (JP); Takahashi, Toshiaki, Tokyo, 180-8750 (JP); Kato, Daiki, Tokyo, 180-8750 (JP); Ogawa, Takaaki, Tokyo, 180-8750 (JP)
(74) Representative: Hoffmann Eitle

(57) **Abstract**

Provided is an apparatus including: an image acquisition unit configured to acquire a captured image; a compression unit configured to compress the captured image to generate a compressed image; an evaluation acquisition unit configured to acquire evaluation according to visibility of the compressed image from a user; and a learning processing unit configured to perform, in response to input of a new captured image, learning processing of a model for outputting a compression parameter value to be applied in compression of the captured image by using learning data including the evaluation, a captured image corresponding to the compressed image targeted for the evaluation, and a compression parameter value applied in generation of the compressed image.

## Description

### BACKGROUND

### 1. TECHNICAL FIELD

The present invention relates to an apparatus, a method, and a program.

### 2. RELATED ART

Patent Document 1 discloses that "A vehicle monitoring apparatus comprising: a monitoring level determination unit that detects a vehicle or a situation around the vehicle and determines a monitoring level of the vehicle based on the detected vehicle situation; a monitoring image generation unit that calculates a compression rate based on the determined monitoring level and generates a monitoring image obtained by compressing a captured image captured by a camera installed in the vehicle at the calculated compression rate; and a transmission unit that transmits information including the generated monitoring image to an external terminal apparatus".

### [Citation List]

### [Patent Document]

Patent Document 1: International Publication No. 2012-160902

### SUMMARY

In a first aspect of the present invention, an apparatus is provided. The apparatus may include an image acquisition unit configured to acquire a captured image. The apparatus may include a compression unit configured to compress the captured image to generate a compressed image. The apparatus may include an evaluation acquisition unit configured to acquire evaluation according to visibility of the compressed image from a user. The apparatus may include a learning processing unit configured to perform, in response to input of a new captured image, learning processing of a model for outputting a compression parameter value to be applied in compression of the captured image by using learning data including the evaluation, a captured image corresponding to the compressed image targeted for the evaluation, and a compression parameter value applied in generation of the compressed image.

The compression unit may compress the captured image for each area to generate the compressed image. The evaluation acquisition unit may acquire the evaluation for at least a partial area of the compressed image. The learning processing unit may perform, in response to input of a new captured image, learning processing of the model for outputting a compression parameter value to be applied in compression of at least a partial area of the captured image using learning data including the evaluation for at least a partial area of the compressed image, the at least a partial area targeted for the evaluation in the captured image, and the compression parameter value applied in generation of the at least a partial area.

The evaluation acquisition unit may acquire the evaluation for an area designated by a user in the compressed image.

The evaluation acquisition unit may acquire an operation for enlarging and displaying the compressed image as the evaluation that is negative for at least an enlarged area of the compressed image.

The evaluation acquisition unit may acquire an operation for displaying a displayed compressed image again as the evaluation that is negative for the compressed image.

The evaluation acquisition unit may acquire the evaluation according to the visibility of the compressed image and smallness of a data amount of the compressed image.

The compression unit may sequentially generate the compressed image by changing a compression parameter value.

The compression unit may increase or decrease the compression parameter value until the evaluation that is negative is obtained by the evaluation acquisition unit.

The compression unit may generate a plurality of compressed images different from each other from a same captured image. The evaluation acquisition unit may acquire a relative evaluation of visibilities among the plurality of compressed images as the evaluation.

The image acquisition unit may acquire, as the captured image, an image which is captured under a reference imaging condition and to which an image effect according to another imaging condition different from the reference imaging condition is applied. The compression unit may generate the compressed image by applying an image effect according to the reference imaging condition to the captured image. The evaluation acquisition unit may acquire the evaluation according to the visibility of the compressed image and a degree of approximation of the compressed image and the image captured under the reference imaging condition.

The learning processing unit may perform learning processing of the model such that a compression parameter value to be applied in compression is between a compression parameter value of a compressed image targeted for the evaluation that is positive and a compression parameter value of a compressed image targeted for the evaluation that is negative.

The image acquisition unit may acquire captured images from a plurality of cameras. The evaluation acquisition unit may acquire the evaluation for each camera. The learning processing unit may perform learning processing of the model different for each camera.

The learning processing unit may use a learned model for one camera as a model for learning for another camera.

The image acquisition unit may acquire captured images from a plurality of cameras. The learning processing unit may perform learning processing of the model common among the plurality of cameras.

The evaluation acquisition unit may acquire the evaluation for each user. The learning processing unit may perform learning processing of the model different for each user.

The learning processing unit may use a learned model for one user as a model for learning for another user.

The learning processing unit may perform learning processing of the model common among a plurality of users.

The apparatus may further include a transmission unit configured to transmit the compressed image to a monitoring terminal. The evaluation acquisition unit may acquire the evaluation via the monitoring terminal.

The apparatus may further include a supply unit configured to supply a captured image newly acquired by the image acquisition unit to the model on which learning processing has been performed by the learning processing unit. The compression unit may apply a compression parameter value output from the model in response to supply of a new captured image by the supply unit, and generate a compressed image from the new captured image.

The apparatus may further include a storage unit configured to store a captured image. The transmission unit may transmit a captured image corresponding to the compressed image to the monitoring terminal in response to acquisition of the evaluation that is negative for the compressed image by the evaluation acquisition unit.

The storage unit may store the captured image and the compressed image, and erase the captured image after a period shorter than that of the compressed image has elapsed.

The compression unit may generate the compressed image by applying an image effect according to the reference imaging condition to a captured image captured under another imaging condition different from the reference imaging condition. The transmission unit may transmit the compressed image and identification information indicating the another imaging condition to the monitoring terminal.

The apparatus may be a transcoder disposed between a monitoring camera that captures a captured image and the monitoring terminal.

In a second aspect of the present invention, a method is provided. The method may include acquiring an image by acquiring a captured image. The method may include compressing the captured image to generate a compressed image. The method may include acquiring evaluation according to visibility of the compressed image from a user. The method may include processing learning by performing, in response to input of a new captured image, learning processing of a model for outputting a compression parameter value to be applied in compression of the captured image by using learning data including the evaluation, a captured image corresponding to the compressed image targeted for the evaluation, and a compression parameter value applied in generation of the compressed image.

In a third aspect of the present invention, a program is applied. The program may cause a computer to function as an image acquisition unit configured to acquire a captured image. The program may cause the computer to function as a compression unit configured to compress the captured image to generate a compressed image. The program may cause the computer to function as an evaluation acquisition unit configured to acquire evaluation according to visibility of the compressed image from a user. The program may cause the computer to function as a learning processing unit configured to perform, in response to input of a new captured image, learning processing of a model for outputting a compression parameter value to be applied in compression of the captured image by using learning data including the evaluation, a captured image corresponding to the compressed image targeted for the evaluation, and a compression parameter value applied in generation of the compressed image.

The summary clause does not necessarily describe all necessary features of the embodiments of the present invention. The present invention may also be a sub-combination of the features described above.

### BRIEF DESCRIPTION OF THE DRAWINGS

Fig. 1 illustrates a security system 1 according to the present embodiment.
Fig. 2 illustrates an operation at a learning stage of the security system 1 according to the present embodiment.
Fig. 3 illustrates an operation at an operation stage of the security system 1 according to the present embodiment.
Fig. 4 illustrates an example of a computer 2200 in which a plurality of aspects of the present invention may be embodied in whole or in part.

### DESCRIPTION OF EXEMPLARY EMBODIMENTS

Hereinafter, the present invention will be described through embodiments of the invention, but the following embodiments do not limit the invention according to the claims. Not all combinations of features described in the embodiments are essential to the solution of the invention.

### [1. Security System 1]

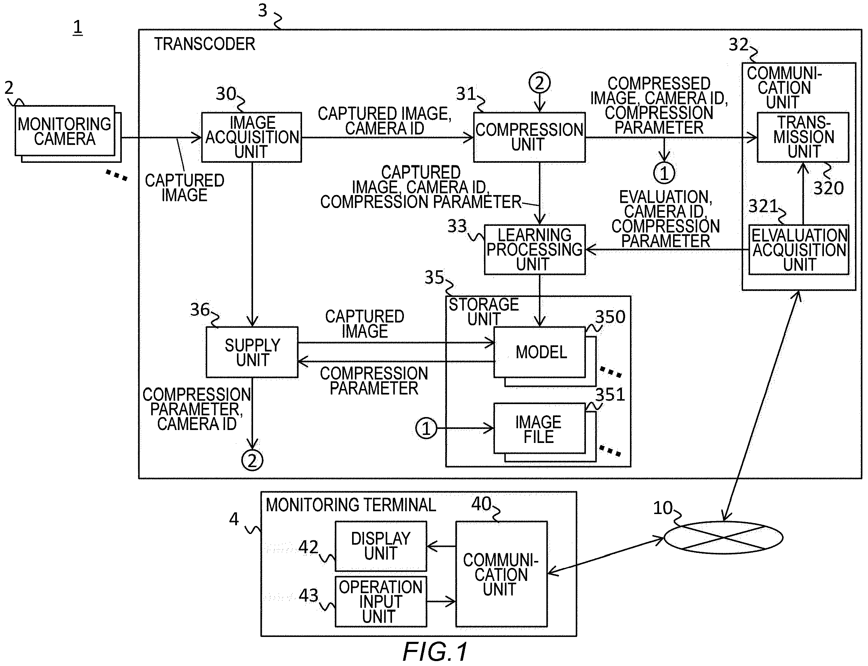

Fig. 1 illustrates a security system 1 according to the present embodiment. The security system 1 includes one or more monitoring cameras 2, a transcoder 3, and a monitoring terminal 4.

The transcoder 3 and the monitoring terminal 4 may be connected via a communication network 10. The communication network 10 may include various networks such as the Internet, a wide area network (WAN), and a local area network, or a combination thereof. The communication network 10 may include at least one of wired or wireless connection points. The communication network 10 may be realized by a dedicated line separated from a public line such as the Internet.

### [1.1. Monitoring camera 2]

Each monitoring camera 2 is an example of a camera, and captures an image of an imaging area. Each monitoring camera 2 may supply an image that has been captured (also referred to as a captured image) to the transcoder 3. The image may be a moving image, and the monitoring camera 2 may constantly capture an image to generate moving image (also referred to as a video) data. For example, each monitoring camera 2 may capture images at 30 fps. A time stamp may be added to each frame of the captured image. Note that the image may be a still image. In this case, monitoring camera 2 may capture an image at regular timing to generate a still image. The monitoring camera 2 may be a visible light camera or an infrared or ultraviolet (as an example, an X-ray) camera. When the security system 1 includes a plurality of monitoring cameras 2, the types (as an example, manufacturer and model number) of the respective monitoring cameras 2 may be different from each other.

Each monitoring camera 2 may be disposed on a road, a parking lot, an electric light, or a utility pole, or may be disposed at an entrance, a passage, or the like of a facility. When the security system 1 includes the plurality of monitoring cameras 2, installation positions and imaging areas of the respective monitoring cameras 2 may be different from each other.

Note that the facility may be a plant, a school, a house, a station, an airport, a museum, a hospital, a store (as an example, a restaurant), a theme park, an amusement park, an attraction facility, or the like. Examples of the plant include industrial plants such as chemical plants and bio plants, plants that manage and control well sources such as gas fields and oil fields and surroundings thereof, plants that manage and control power generation such as hydraulic power, thermal power, and nuclear power, plants that manage and control environmental power generation such as solar power and wind power, and plants that manage and control water/sewerage, dams, and the like.

### [1.2. Transcoder 3]

The transcoder 3 is an example of the apparatus, and is disposed between the monitoring camera 2 and the monitoring terminal 4. The transcoder 3 may compress the captured image from each monitoring camera 2 and supply the compressed image to the monitoring terminal 4. The transcoder 3 includes an image acquisition unit 30, a compression unit 31, a communication unit 32, a learning processing unit 33, a storage unit 35, and a supply unit 36.

### [1.2 (1). Image acquisition unit 30]

The image acquisition unit 30 acquires a captured image. The image acquisition unit 30 may acquire captured images from the plurality of monitoring cameras 2. Note that, in the present embodiment, as an example, the image acquisition unit 30 is directly connected to each monitoring camera 2, but may be connected via the communication network 10.

The image acquisition unit 30 may supply the captured image which is acquired, to the compression unit 31 and the supply unit 36. When acquiring the captured images from the plurality of monitoring cameras 2, the image acquisition unit 30 may add identification information (also referred to as camera ID) of the monitoring camera 2 to the captured images and supply the captured images to the compression unit 31 and the supply unit 36.

### [1.2 (2). Compression unit 31]

The compression unit 31 compresses the captured image to generate a compressed image. The compression unit 31 may sequentially generate the compressed image by changing a compression parameter value. When a compression parameter value is supplied from the supply unit 36 to be described later, the compression unit 31 may generate a compressed image by applying the compression parameter value. The compression unit 31 may perform compression within each frame included in a captured image as a moving image, or may perform compression within consecutive frames. The compression parameter value may be a value indicating at least one of a compression rate, a resolution, the number of gradations, or a frame rate. The same time stamp as the frame of the corresponding captured image may be added to each frame of the compressed image.

The compression unit 31 may compress the captured images from the plurality of monitoring cameras 2, respectively. In this case, the compression unit 31 may add the camera ID to the compressed image.

The compression unit 31 may supply the compressed image to the communication unit 32 and the storage unit 35. The compression unit 31 may add the compression parameter value to the compressed image and supply the compressed image to the communication unit 32 and the storage unit 35. The compression unit 31 may supply the compression parameter value used to generate the compressed image and the captured image before compression to the learning processing unit 33.

### [1.2 (3). Communication unit 32]

The communication unit 32 communicates with the monitoring terminal 4 via the communication network 10. The communication unit 32 includes a transmission unit 320 and an evaluation acquisition unit 321.

### [1.2 (3-1). Transmission unit 320]

The transmission unit 320 transmits the compressed image to the monitoring terminal 4. The transmission unit 320 may sequentially supply the compressed image supplied from the compression unit 31 to the monitoring terminal 4.

### [1.2 (3-2). Evaluation acquisition unit 321]

The evaluation acquisition unit 321 acquires an evaluation according to the visibility of the compressed image from the user. The user may be an operator or a security guard who operates the monitoring terminal 4. In addition, the user may be a person with color-weakness or a person with amblyopia. The evaluation acquisition unit 321 may acquire the evaluation via the monitoring terminal 4.

The evaluation acquisition unit 321 may acquire the evaluation from the operation content performed on the compressed image in the monitoring terminal 4. In the present embodiment, as an example, the evaluation acquisition unit 321 may receive, from the monitoring terminal 4, the operation content performed on the compressed image in the monitoring terminal 4. The operation content may include information regarding the compressed image to be operated, and may include, for example, a camera ID and a compression parameter value added to the compressed image, and a time stamp of at least some frames in the compressed image. The acquired evaluation may be a binary value of a positive evaluation indicating that the compressed image is easy to see and a negative evaluation indicating that the compressed image is hard to see.

The evaluation acquisition unit 321 may acquire the evaluation for each monitoring camera 2. For example, the evaluation acquisition unit 321 may acquire the evaluation for each camera ID added to the compressed image to be evaluated.

The evaluation acquisition unit 321 may supply the acquired evaluation to the learning processing unit 33 in association with the compression parameter value, the camera ID, and the time stamp added to the compressed image to be evaluated. Note that, although details will be described later, when learning processing of a model 350 to be described later has already been performed by the learning processing unit 33, the evaluation acquisition unit 321 may supply the acquired evaluation to the transmission unit 320 in association with the camera ID and the time stamp added to the compressed image to be evaluated. As a result, the captured image corresponding to the compressed image targeted for the negative evaluation is transmitted from the transmission unit 320 to the monitoring terminal 4.

### [1.2 (4). Storage unit 35]

The storage unit 35 stores various types of information. The storage unit 35 may store one or more models 350 and one or more image files 351.

In response to input of a new captured image, each model 350 outputs a compression parameter value to be applied in compression of the captured image. When a plurality of models 350 are stored in the storage unit 35, each model 350 may have a one-to-one correspondence with the monitoring camera 2. The model 350 may be subjected to learning processing by the learning processing unit 33. Note that the model 350 may be any conventionally known machine learning algorithm, for example, a neural network, a random forest, gradient boosting, logistic regression, a support vector machine (SVM), or the like.

The image file 351 stores the compressed image supplied from the compression unit 31 for each monitoring camera 2. The image file 351 may further store the captured image before compression. The storage unit 35 may erase the captured image after a period shorter than that of the compressed image has elapsed. For example, the storage unit 35 may store the captured image and then erase the captured image after a first period (as an example, one hour or one day) has elapsed. The storage unit 35 may store the compressed image and then erase the compressed image after a second period (as an example, one week or one month) longer than that of the captured image has elapsed.

### [1.2 (5). Learning processing unit 33]

The learning processing unit 33 performs learning processing of the model 350 using learning data including the evaluation acquired by the evaluation acquisition unit 321, the compression parameter value applied in the generation of the compressed image targeted for the evaluation, and the captured image corresponding to the compressed image. Note that the compression parameter value applied in the generation of the compressed image targeted for the evaluation may be a compression parameter value supplied from the evaluation acquisition unit 321 in association with the evaluation. The captured image corresponding to the compressed image targeted for the evaluation may be a captured image corresponding to the camera ID and the time stamp supplied from the evaluation acquisition unit 321 in association with the evaluation among the captured images supplied from the compression unit 31.

The learning processing unit 33 may perform learning processing of different models 350 for each monitoring camera 2, and may perform learning processing of each model 350 stored in the storage unit 35. For example, the learning processing unit 33 may perform the learning processing of the model 350 corresponding to one monitoring camera 2 by using the learning data including the evaluation to which one camera ID indicating the one monitoring camera 2 is added, the compression parameter value added to the compressed image targeted for the evaluation, and the captured image corresponding to the compressed image.

### [1.2 (6). Supply unit 36]

The supply unit 36 supplies the captured image newly acquired by the image acquisition unit 30 to the model 350 on which the learning processing has been performed by the learning processing unit 33. When the model 350 for each monitoring camera 2 is stored in the storage unit 35, the supply unit 36 may supply the captured image to the model 350 corresponding to the camera ID added to the captured image.

The supply unit 36 may supply the compression parameter value output from the model 350 to the compression unit 31. As a result, the compression parameter value output from the model 350 is applied by the compression unit 31 in response to the supply of a new captured image by the supply unit 36, and a compressed image is generated from the new captured image. When the images of the plurality of monitoring cameras 2 are supplied from the image acquisition unit 30, the supply unit 36 may supply the camera ID added to the captured image to the compression unit 31 in association with the compression parameter value, and apply the compression parameter value to the compression of the captured image to which the camera ID is added.

### [1.3. Monitoring terminal 4]

The monitoring terminal 4 monitors the monitoring area using the monitoring camera 2. The monitoring terminal 4 includes a communication unit 40, a display unit 42, and an operation input unit 43.

### [1.3 (1). Communication unit 40]

The communication unit 40 communicates with the transcoder 3 via the communication network 10. The communication unit 40 may supply the compressed image received from the transcoder to the display unit 42. In addition, the communication unit 40 may transmit the operation content supplied from the operation input unit 43 to the transcoder 3.

### [1.3 (2). Display unit 42]

The display unit 42 displays the compressed image. When the compressed images of the plurality of monitoring cameras 2 are supplied, the display unit 42 may display these compressed images together.

### [1.3 (3). Operation input unit 43]

The operation input unit 43 receives various operation inputs from the user. The operation input unit 43 may supply the input operation content to the communication unit 40.

The operation content supplied to the communication unit 40 may indicate evaluation according to the visibility of the compressed image. The operation content may include information regarding the compressed image to be operated, and in the present embodiment, as an example, may include a camera ID and a compression parameter value added to the compressed image, and a time stamp of at least some frames in the compressed image.

According to the transcoder 3 described above, the evaluation according to the visibility of the compressed image obtained by compressing the captured image is acquired from the user, and in response to the input of the new captured image, the learning processing of the model 350 for outputting the compression parameter value to be applied in the compression of the captured image is performed using the learning data including the evaluation, the captured image corresponding to the compressed image targeted for the evaluation, and the compression parameter value applied in the generation of the compressed image. Therefore, it is possible to generate a compressed image that is easy for the user to see by using the compression parameter value output from the model 350 to which the captured image is input for compression of the captured image.

Since the compression parameter value is sequentially changed to generate the compressed image, the learning processing of the model 350 can be performed using the learning data including the plurality of compression parameter values having different values and the evaluation of the visibility of the compressed image to which the compression parameter value is applied. Therefore, it is possible to reliably generate a compressed image that is easy for the user to see.

The captured images are acquired from the plurality of monitoring cameras 2, the evaluation is acquired for each of the monitoring cameras 2, and learning processing of different models 350 is performed for each of the monitoring cameras 2. Therefore, even when the type, installation position, and imaging area are different for each monitoring camera 2, it is possible to generate a compressed image that is easy for the user to see for each monitoring camera 2.

The captured image newly acquired by the image acquisition unit 30 is supplied to the model 350 on which the learning processing has been performed, and the compressed image is generated from the new captured image by applying the compression parameter value output from the model 350. Therefore, it is possible to appropriately generate an image that is easy for the user to see from the newly acquired captured image.

Since the compressed image is transmitted to the monitoring terminal 4 and the evaluation is acquired via the monitoring terminal 4, it is possible to generate a compressed image that is easy to see for a user who performs monitoring using the monitoring terminal 4.

Since the captured image and the compressed image are stored in the storage unit 35 and the captured image is erased after a period shorter than that of the compressed image has elapsed, the storage capacity can be reduced as compared with a case where the captured image is continuously stored longer than that of the compressed image.

### [2. Operation] [2.1. Learning stage]

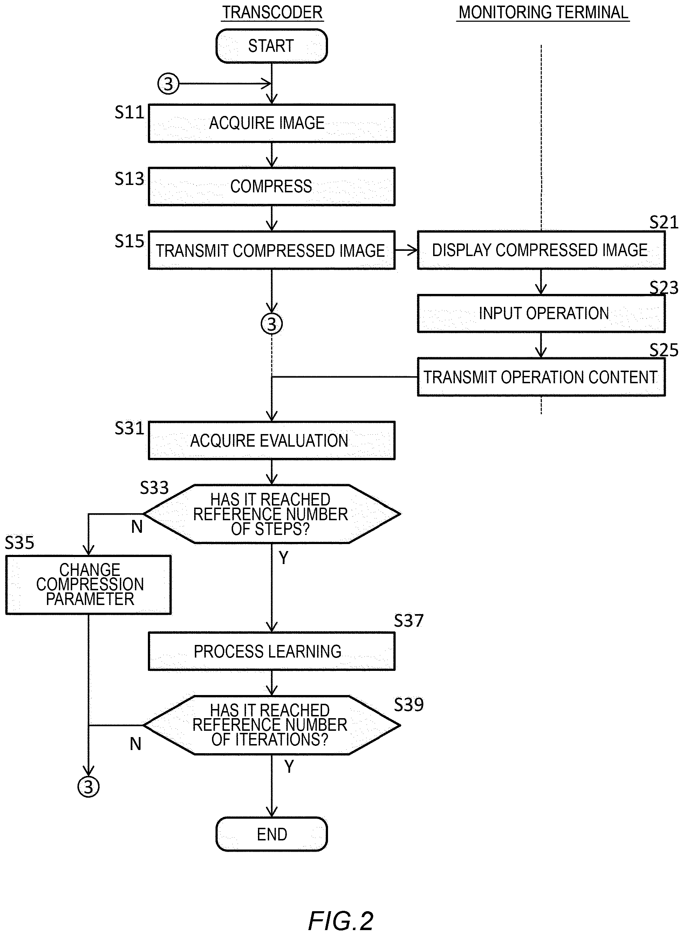

Fig. 2 illustrates an operation at a learning stage of the security system 1 according to the present embodiment. The security system 1 learns the model 350 while performing monitoring by performing the processing of Steps S11 to S39.

First, in Step S11, the image acquisition unit 30 acquires a captured image from each monitoring camera 2.

In Step S13, the compression unit 31 compresses the captured image to generate a compressed image. The compression unit 31 may compress the captured image in an uncompressed period among the acquired captured images. For example, when the processing of Step S13 is performed for the first time, the compression unit 31 may compress the entire captured image so far. When the processing in and after Step S11 is repeated to repeatedly perform the processing in Step S13, the compression unit 31 may compress the captured image in a period after the captured image compressed in the previous processing in Step S13.

When the processing of Step S13 is performed for the first time, the compression unit 31 may generate a compressed image by applying an initial value of the preset compression parameter value. When the processing in and after Step S11 is repeated to repeatedly perform the processing in Step S13 a plurality of times, the compression unit 31 may generate a compressed image by applying the compression parameter value set in Step S35 described later. The compression unit 31 may apply the same compression parameter value or different compression parameter values to the captured images from the plurality of monitoring cameras 2.

In Step S15, the transmission unit 320 transmits the compressed image generated from the captured image of each monitoring camera 2 to the monitoring terminal 4. As a result, the compressed image is received by the communication unit 40 of the monitoring terminal 4. When the processing of Step S 15 is completed, the transcoder 3 may shift the process to Step S11.

In Step S21, the display unit 42 of the monitoring terminal 4 also displays the compressed image corresponding to each monitoring camera 2. As a result, monitoring is performed using the compressed image.

In Step S23, the operation input unit 43 receives various operation inputs from the user. For example, the operation input unit 43 may receive an operation for enlarging and displaying any compressed image displayed by the display unit 42. The operation input unit 43 may receive an operation for displaying the displayed compressed image again. As an example, the operation for displaying the displayed compressed image again may be an operation for performing rewinding (also referred to as fast-return or playback) and displaying the frame of the previously displayed compressed image again. The display unit 42 may change the display content according to the input operation content.

In Step S25, the communication unit 40 of the monitoring terminal 4 transmits the input operation content to the transcoder 3.

In Step S31, the evaluation acquisition unit 321 of the transcoder 3 acquires the evaluation according to the visibility of the compressed image. The evaluation acquisition unit 321 may acquire the evaluation on the basis of the operation content for the monitoring terminal 4.

For example, the evaluation acquisition unit 321 may acquire at least one of an operation for enlarging and displaying the compressed image or an operation for displaying the displayed compressed image again as a negative evaluation for the compressed image. The evaluation acquisition unit 321 may acquire, as a positive evaluation, that an operation indicating a negative evaluation has not been performed for a reference time (as an example, one minute or the like).

The evaluation acquisition unit 321 may acquire other operation contents on the operation input unit 43 of the monitoring terminal 4 as the positive evaluation or the negative evaluation. For example, the evaluation acquisition unit 321 may acquire a key operation associated with the positive evaluation as a positive evaluation, and may acquire a key operation associated with the negative evaluation as a negative evaluation. The evaluation acquisition unit 321 may store the acquired evaluation in the storage unit 35 in association with the compressed image to be evaluated. Note that the processing of the transcoder 3 in and after Step S31 may be performed in parallel with the processing in Steps S11 to S15, or may be performed by interrupting the processing in Steps S11 to S15.

In Step S33, the learning processing unit 33 determines whether the processing of Step S31 has been performed by a reference number of steps. When it is determined that the processing has not been performed by the reference number of steps (Step S33; No), the process is shifted to Step S35. When it is determined in Step S33 that the processing has been performed by the reference number of steps (Step S33; Yes), the process is shifted to Step S37.

In Step S35, the compression unit 31 changes the compression parameter value applied to compression. As a result, the changed compression parameter value is applied in Step S13 described above to generate a compressed image. Then, by repeating the processing of Steps S11 to S35, the learning data including the captured image, the evaluation of the compressed image generated from the captured image, and the compression parameter value applied to generate the compressed image is generated by the reference number of steps.

Note that the compression unit 31 may increase or decrease the compression parameter value until a negative evaluation is acquired by the evaluation acquisition unit 321. For example, when a negative evaluation is not acquired by the evaluation acquisition unit 321 in the processing of Step S31, the compression unit 31 may change any one (also referred to as a first type parameter) of the compression rate, the resolution, the number of gradations, and the frame rate indicated by the compression parameter value in one direction of increase or decrease every time the processing of Step S35 is performed. When a negative evaluation is acquired by the evaluation acquisition unit 321 in the processing of Step S31, the compression unit 31 may change the first type parameter that has been changed in one direction in the reverse direction, or may increase or decrease any other one, which is different from the first type parameter, of the compression rate, the resolution, the number of gradations, and the frame rate indicated by the compression parameter value.

The compression unit 31 may change the compression parameter value while aligning the compression parameter values among the plurality of monitoring cameras 2, or may change the compression parameter value independently for each monitoring camera 2.

The compression unit 31 may change the compression parameter value continuously or discontinuously, that is, stepwise, every time the processing of Step S35 is performed. When the compression parameter value is discontinuously changed, the compression unit 31 may or may not make the change amount constant every time the processing of Step S35 is performed.

In Step S37, the learning processing unit 33 performs the learning processing of the model 350 using learning data including the acquired evaluation, the captured image corresponding to the compressed image targeted for the evaluation, and the compression parameter value applied in the generation of the compressed image. The learning processing unit 33 may perform learning processing of different models 350 for each monitoring camera 2.

In response to an input of a new captured image to the model 350, the learning processing unit 33 may perform learning processing such that a compression parameter value to be applied for generating a compressed image evaluated as being not negative is output from the model 350. For example, the learning processing unit 33 may perform the learning processing of the model 350 such that the compression parameter value to be applied in the compression is between the compression parameter value of the compressed image targeted for the positive evaluation and the compression parameter value of the compressed image targeted for the negative evaluation. As an example, the learning processing unit 33 may detect a boundary between a group of compression parameter values of a plurality of compressed images targeted for the positive evaluation and a group of compression parameter values of a plurality of compressed images targeted for the negative evaluation. Then, the learning processing unit 33 may perform the learning processing of the model 350 such that the compression parameter value to be applied in the compression is between the compression parameter value closest to the boundary among the compression parameter values of the plurality of compressed images targeted for the positive evaluation and the compression parameter value closest to the boundary among the compression parameter values of the plurality of compressed images targeted for the negative evaluation.

Note that the learning processing unit 33 may perform the learning processing by using the learned model 350 for one monitoring camera 2 as the model 350 for learning for another monitoring camera 2. For example, the learning processing unit 33 may duplicate the model 350 in which the operation of Fig. 2 has been performed for one monitoring camera 2 to obtain the model 350 for learning for the other monitoring camera 2, and perform the learning processing using the learning data for the other monitoring camera 2.

In Step S39, the learning processing unit 33 determines whether the processing in Steps S11 to S37 has been performed by the reference number of iterations. When it is determined that the processing has not been performed by the reference number of iterations (Step S39; No), the process is shifted to Step S11. When it is determined that the processing has been performed by the reference number of iterations (Step S39; Yes), the process ends.

According to the above operation, since the operation for enlarging and displaying the compressed image is acquired as a negative evaluation for the compressed image, it is possible to reliably acquire a negative evaluation, unlike a case where the user is caused to perform an input operation of a negative evaluation separately from the operation for enlarging and displaying.

Since the operation for displaying the displayed compressed image again is acquired as a negative evaluation for the compressed image, it is possible to reliably acquire a negative evaluation, unlike a case where the user is caused to perform an input operation of a negative evaluation separately from the operation of redisplay.

Since the compression parameter value is increased or decreased until a negative evaluation is obtained, an extremely compressed image that is not hard for the user to see can be generated. Therefore, by changing the compression parameter value so as to reduce the data amount of the compressed image, it is possible to generate a compressed image that is easy for the user to see and has a small data amount and to use the compressed image for the learning processing.

The learning processing of the model 350 is performed by the learning processing unit 33 such that the compression parameter value to be applied in compression is between the compression parameter value of the compressed image targeted for the positive evaluation and the compression parameter value of the compressed image targeted for the negative evaluation. Therefore, by applying the compression parameter value output from the learned model 350 to compression, it is possible to generate an extremely compressed image that is not hard for the user to see.

Since the learned model 350 for one camera is used as the model 350 for learning for another camera, the learning processing of the model 350 for the other cameras can be made efficient.

### [2.2. Operation stage]

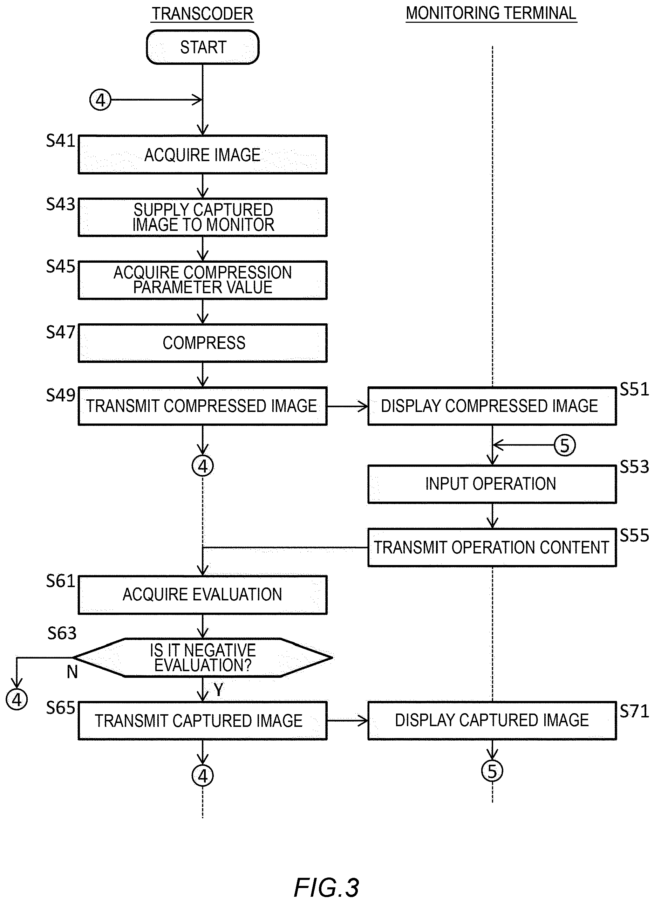

Fig. 3 illustrates an operation at an operation stage of the security system 1 according to the present embodiment. The security system 1 performs monitoring using the learned model 350 by performing the processing of Steps S41 to S71.

First, in Step S41, the image acquisition unit 30 acquires a captured image from each monitoring camera 2.

In Step S43, the supply unit 36 supplies the captured image to the model 350. The supply unit 36 may supply the captured image of each monitoring camera 2 to the model 350 corresponding to the monitoring camera 2. The supply unit 36 may supply a captured image in an uncompressed period among the acquired captured images to the model 350. For example, when the processing of Step S43 is performed for the first time, the supply unit 36 may supply the entire captured image so far to the model 350. When the processing in and after Step S41 is repeated and the processing in Step S43 is repeatedly performed, the supply unit 36 may supply a captured image in a period after the captured image supplied in the previous processing in Step S43 to the model 350.

In Step S45, the supply unit 36 acquires the compression parameter value output from the model 350. For each monitoring camera 2, the supply unit 36 may acquire the compression parameter value from the model corresponding to the monitoring camera 2.

In Step S47, the compression unit 31 applies the compression parameter value from the supply unit 36 to compress the captured image from each monitoring camera 2. The compression unit 31 may apply the compression parameter value output from the model 350 corresponding to each monitoring camera 2 to the captured image from the monitoring camera 2 to compress the captured image.

In Step S49, the transmission unit 320 transmits the compressed image to the monitoring terminal 4. As a result, the compressed image is received by the communication unit 40 of the monitoring terminal 4. When the processing of Step S49 is completed, the transcoder 3 may shift the process to Step S41.

In Step S51, the display unit 42 of the monitoring terminal 4 also displays the compressed image corresponding to each monitoring camera 2. As a result, monitoring is performed using the compressed image.

In Step S53, the operation input unit 43 receives various operation inputs from the user in the same manner as in Step S23 described above. However, when the operation of enlarged display or rewinding display has been performed, the display unit 42 may maintain the display content at the stage of Step S53.

In Step S55, the communication unit 40 of the monitoring terminal 4 transmits the input operation content to the transcoder 3.

In Step S61, the evaluation acquisition unit 321 of the transcoder 3 acquires the evaluation according to the visibility of the compressed image in the same manner as in Step S31 described above. Note that the processing of the transcoder 3 in and after Step S61 may be performed by interrupting the processing in Steps S41 to S49. The evaluation acquisition unit 321 may store the acquired evaluation in the storage unit 35 in association with the compressed image to be evaluated. When the evaluation is stored in the storage unit 35, the learning processing may be performed again on the learned model 350 in accordance with the user operation in the same manner as the processing in Step S37 described above.

In Step S63, the evaluation acquisition unit 321 determines whether the acquired evaluation is negative. When it is determined that the evaluation is not negative (Step S63; No), the process is shifted to Step S41. When it is determined that the evaluation is negative (Step S63; Yes), the process is shifted to Step S65.

In Step S65, the transmission unit 320 reads the captured image corresponding to the compressed image to be evaluated from the image file 351 and transmits the captured image to the monitoring terminal 4. As a result, in response to acquisition of the evaluation that is negative for the compressed image, the captured image corresponding to the compressed image is transmitted to the monitoring terminal 4. The captured image corresponding to the compressed image to be evaluated may be a captured image corresponding to the camera ID and the time stamp supplied from the evaluation acquisition unit 321 in association with the evaluation. When the processing of Step S65 is completed, the transcoder 3 may shift the process to Step S41 described above.

Then, in Step S71, the display unit 42 of the monitoring terminal 4 displays the received captured image. As a result, monitoring is performed using the captured image. When the operation of enlarged display or rewinding display has been performed in Step S53 described above, the display unit 42 may change the display content using the captured image. When the processing of Step S71 is completed, the monitoring terminal 4 may shift the process to Step S53 described above.

According to the above operation, in response to acquisition of the evaluation that is negative for the compressed image, the captured image corresponding to the compressed image is transmitted to the monitoring terminal 4. Therefore, when it is hard for the user to see the compressed image, monitoring can be performed using the captured image before compression.

### [3. Modification regarding object to be compressed]

In the above embodiment, it has been described that the compression unit 31 generates a compressed image by applying the common compression parameter value to the entire captured image, but the compressed image may be generated by compressing the captured image for each area. For example, the compression unit 31 may compress only a partial area of the frame of the captured image, or may compress the captured image by applying different compression parameter values to the respective areas of the frame. The compression unit 31 may add the compression parameter value applied to the compression and the information indicating the compression area by the compression parameter value to the compressed image and supply the compressed image to the transmission unit 320, the storage unit 35, and the learning processing unit 33. Note that the area in the frame may be an area specified from an edge of a subject, an area specified from image information such as color and luminance, or an area specified by coordinates in the frame.

In the present modification, the evaluation acquisition unit 321 may acquire the evaluation for at least a partial area of the compressed image. For example, the evaluation acquisition unit 321 may acquire the evaluation for an area designated by the user in the compressed image. As an example, when any area of the frame of the compressed image is designated in the monitoring terminal 4, the evaluation acquisition unit 321 may acquire at least the evaluation for the area from the performed operation content. More specifically, the evaluation acquisition unit 321 may acquire an operation for enlarging and displaying the compressed image as at least a negative evaluation for the enlarged area. When acquiring the evaluation for a partial area in the compressed image, the evaluation acquisition unit 321 may supply the acquired evaluation to the learning processing unit 33 in association with the information indicating the area to be evaluated, the compression parameter value added to the compressed image to be evaluated, the camera ID, and the time stamp.

In the present modification, the model 350 may output, in response to input of a new captured image, a compression parameter value to be applied in compression of at least a partial area of the captured image. The learning processing unit 33 that performs such learning processing of the model 350 may perform the learning processing using the learning data including the evaluation for at least a partial area of the compressed image, the at least a partial area targeted for the evaluation in the captured image, and the compression parameter value applied in the generation of the at least a partial area.

According to the above modification, by using the compression parameter value for at least a partial area in the captured image, which is output from the model 350 to which the captured image has been input, for the compression of the area, it is possible to generate a compressed image that is easy for the user to see for the area.

Since the evaluation for the area designated by the user in the compressed image is acquired, it is possible to generate a compressed image that is easy for the user to see for the designated area.

### [4. Other modifications]

Note that, in the above embodiment, the transcoder 3 has been described as including the storage unit 35 and the supply unit 36, but may not include any of these. For example, when the transcoder 3 does not include the storage unit 35, the learning processing unit 33 may perform learning processing on the model 350 in the externally connected storage apparatus.

Although the description has been given assuming that the compression unit 31 generates one compressed image from one captured image, a plurality of compressed images different from each other may be generated. For example, the compression unit 31 may generate a plurality of compressed images by applying different compression parameter values to the captured images with the same time stamp. In this case, the display unit 42 of the monitoring terminal 4 may display a plurality of compressed images generated from one captured image side by side. The evaluation acquisition unit 321 may acquire the relative evaluation of the visibility among a plurality of compressed images generated from one captured image as the evaluation of the visibility. For example, the evaluation acquisition unit 321 may receive, from the monitoring terminal 4, an operation content for selecting a compressed image that is relatively easily visible or a compressed image that is relatively hard to view from among the plurality of compressed images generated from one captured image, and may acquire the evaluation for a compressed image selected from the operation content or a compressed image that is not been selected. In this way, when the relative evaluation of the visibility among the plurality of compressed images generated from one captured image is acquired and used for learning of the model 350, the compression parameter value output from the model 350 is used for compression of the captured image, so that it is possible to reliably generate a compressed image that is easy for the user to see.

Although the description has been given assuming that the compression unit 31 changes the compression parameter value each time the evaluation acquisition unit 321 acquires the evaluation of the visibility, the compression parameter value may be changed each time the reference time elapses after the compressed image is displayed.

Further, the description has been given assuming that the learning processing unit 33 performs the learning processing of the model 350 such that the compression parameter value to be applied to compression is between the compression parameter value of the compressed image targeted for the positive evaluation and the compression parameter value of the compressed image targeted for the negative evaluation. However, the learning processing may be performed such that the compression parameter value becomes another value. For example, the learning processing unit 33 may perform the learning processing of the model 350 such that the compression parameter value to be applied in the compression becomes the compression parameter value closest to the compression parameter value targeted for the negative evaluation among the compression parameter values of the compressed image targeted for the positive evaluation. As an example, the learning processing unit 33 may detect a boundary between a group of compression parameter values of a plurality of compressed images targeted for the positive evaluation and a group of compression parameter values of a plurality of compressed images targeted for the negative evaluation. Then, the learning processing unit 33 may perform the learning processing of the model 350 such that the compression parameter value to be applied in the compression becomes the compression parameter value of the compressed image closest to the boundary among the compression parameter values of the plurality of compressed images targeted for the positive evaluation.

Although the description has been given assuming that the learning processing unit 33 performs the learning processing of the model 350 different for each monitoring camera 2, the learning processing of the model 350 common among the plurality of monitoring cameras 2 may be performed. As a result, any captured image by any monitoring camera 2 can be compressed into a compressed image that is easy for the user to see by using the compression parameter value output from the same model 350. The learning processing can be made more efficient as compared with a case where the learning processing of the model 350 different for each monitoring camera 2 is performed. Note that, when the learning processing of the common model 350 is performed among the plurality of monitoring cameras 2, the storage unit 35 may store a single model 350. The evaluation acquisition unit 321 may acquire the evaluation for each of the monitoring cameras 2, or may acquire the evaluation without distinguishing the plurality of monitoring cameras 2.

Although the description has been given assuming that the learning processing unit 33 performs the learning processing of the model 350 different for each monitoring camera 2, in addition to or instead of this, the learning processing of the model 350 different for each user may be performed. In this case, the learning processing unit 33 may use the learned model 350 for one user as the model 350 for learning for another user. For example, the learning processing unit 33 may duplicate the model 350 learned for one user as the model 350 for learning for another user, and perform the learning processing using the learning data for the another user. The evaluation acquisition unit 321 may acquire the evaluation for each user. For example, the evaluation acquisition unit 321 may receive operation content including identification information (also referred to as a user ID) of a user who has performed the operation from the monitoring terminal 4, and acquire the evaluation for each user ID. In this case, the monitoring terminal 4 may receive various operation inputs after receiving the login of the user. By performing the learning processing of the model 350 different for each user in this manner, it is possible to generate, for each user, a compressed image that is easy for the user to see. By using the learned model 350 for one user as the model 350 for learning for another user, the learning processing of the model 350 for another user can be made efficient.

Although the description has been given assuming that the learning processing of the model 350 different for each user is performed, the learning processing of the model 350 common among a plurality of users may be performed. As a result, it is possible to generate a compressed image that is easy to see for any user by using the compression parameter values output from the same model 350. The learning processing can be made more efficient as compared with a case where the learning processing of the model 350 different for each user is performed. Note that, when the learning processing of the common model 350 is performed among a plurality of users, the storage unit 35 may store a single model 350. The evaluation acquisition unit 321 may acquire the evaluation for each user, or may acquire the evaluation without distinguishing the plurality of users.

The description has been given assuming that the compression unit 31 performs compression by applying the compression parameter value indicating at least one of the compression rate, the resolution, the number of gradations, or the frame rate. However, in addition to or instead of this, the compression may be performed by applying the compression parameter value indicating an image effect (also referred to as an image effect). In other words, the compression unit 31 may apply the image effect indicated by the compression parameter value to the captured image to perform compression. For example, the compression unit 31 may generate a compressed image by applying an image effect according to a reference imaging condition to a captured image that is captured under another imaging condition different from the reference imaging condition. The imaging condition may be a condition according to the brightness or the weather of the imaging area, the reference imaging condition may be an imaging condition under which the subject is clearly imaged (for example, an imaging condition in good weather during the daytime), and the other imaging conditions may be imaging conditions under which the subject can be imaged unclearly (for example, imaging conditions of nighttime, snowfall, and rainfall). Applying the image effect according to the reference imaging condition to the captured image that is captured under another imaging condition different from the reference imaging condition may be removing the image effect according to another imaging condition from the captured image, or may be changing the captured image captured under another imaging condition to an image captured under the reference imaging condition. As an example, the compression unit 31 may apply an image effect according to a good weather imaging condition to a captured image captured under a snowfall imaging condition to generate a compressed image from which snow particles have been removed. When the image effect is applied according to the imaging condition, the transcoder 3 may include a detection unit (not illustrated) that detects the imaging condition of the imaging area of each monitoring camera 2 and provides the imaging condition to the compression unit 31, and the detection unit may be provided with a brightness sensor, a thermometer, a rain gauge, an anemometer, or the like. In this case, the transmission unit 320 may transmit the compressed image and the identification information indicating the imaging condition of the imaging area to the monitoring terminal 4. As a result, it is possible to notify the user of the monitoring terminal 4 that the feature of the image according to the imaging condition has disappeared due to compression, and thus, it is possible to appropriately generate a restored image according to the original imaging condition and perform monitoring.

The description has been given assuming that the image acquisition unit 30 acquires the captured image captured by the monitoring camera 2, but an image to which an image effect is applied after capturing may be acquired as the captured image. For example, the image acquisition unit 30 may acquire, as the captured image, an image which is captured in the reference imaging condition (as an example, an imaging condition in good weather) and to which an image effect corresponding to another imaging condition different from the reference imaging condition (for example, an imaging condition for snowfall) is applied (for example, an image captured in good weather and to which an image effect of an imaging condition for snowfall is added). In this case, the captured image may be supplied from an image processing apparatus (not illustrated) that adds an image effect to the image captured by the monitoring camera 2 to the image acquisition unit 30. The captured image to which the image effect is added may be acquired when learning is performed on the model 350, and as an example, may be acquired in the processing of Step S11 in the above-described embodiment. When a captured image to which an image effect according to another imaging condition (as an example, an imaging condition for snowfall) different from the reference imaging condition (as an example, an imaging condition for good weather) is added is acquired, the compression unit 31 may generate a compressed image by applying the image effect according to the reference imaging condition (to remove snow particles as an example) to the captured image. The evaluation acquisition unit 321 may acquire evaluation (also referred to as integrated evaluation) according to the visibility of the compressed image and the degree of approximation of the compressed image and the image captured under the reference imaging condition. In this case, it is possible to generate a compressed image that has a high degree of approximation to the image captured under the reference imaging condition and is easy for the user to see. Here, the degree of approximation between the compressed image and the image captured under the reference imaging condition may indicate how close the compressed image is to the image captured under the reference imaging condition (also referred to as a reference image). The reference image may be an original image of the compressed image and the captured image. As an example, the reference image may be an image before an image effect according to another imaging condition is added to form a captured image among images captured under the reference imaging condition, or may be an image before an image effect according to another imaging condition is added to form a captured image and an image effect according to the reference imaging condition is further added to form a compressed image among images captured under the reference imaging condition. The degree of approximation between the images may be a value calculated by a conventionally known method, or may be, for example, a degree of coincidence of analysis results by image analysis. When the degree of approximation between the compressed image and the reference image is smaller than the allowable degree of approximation arbitrarily set in advance, the integrated evaluation may be a negative evaluation regardless of the evaluation according to the visibility. When the degree of approximation between the compressed image and the reference image is an allowable degree of approximation, the integrated evaluation may be an evaluation itself according to visibility. As an example, the integrated evaluation may be a binary value of a positive evaluation and a negative evaluation.

The description has been given assuming that the evaluation acquisition unit 321 acquires the evaluation according to the visibility of the compressed image and the degree of approximation of the captured image and the compressed image. However, instead of or in addition to the degree of approximation, the evaluation acquisition unit 321 may acquire the evaluation according to the visibility of the compressed image and other attribute values of the compressed image. As an example, the evaluation acquisition unit 321 may acquire evaluation (also referred to as integrated evaluation) according to the visibility of the compressed image and the smallness of the data amount of the compressed image. In this case, it is possible to generate a compressed image that is easy for the user to see and has a small data amount. When the data amount of the compressed image is larger than the preset allowable data amount, the integrated evaluation may be a negative evaluation regardless of the evaluation according to the visibility. When the data amount of the compressed image is equal to or less than the allowable data amount, the integrated evaluation may be the evaluation itself according to the visibility. As an example, the integrated evaluation may be a binary value of a positive evaluation and a negative evaluation. The allowable data amount may be set on the basis of the communication band of the communication network 10, and may be, as an example, a data amount with which a compressed image can be sequentially displayed in the monitoring terminal 4 without missing information. Alternatively, the allowable data amount may be set on the basis of a communication fee in the communication network 10, or may be a data amount in which the communication fee according to a data communication amount is equal to or less than an allowable price.

Although the apparatus has been described as a transcoder, another apparatus may be used. For example, the apparatus may be a learning apparatus and may generate and provide a learned model 350 to a transcoder.

Various embodiments of the present invention may also be described with reference to flowcharts and block diagrams, where the blocks may represent (1) a stage of processing in which an operation is performed or (2) a section of an apparatus that is responsible for performing the operation. Certain stages and sections may be implemented by dedicated circuitry, programmable circuitry provided with computer-readable instructions stored on a computer-readable medium, and/or a processor provided with computer-readable instructions stored on a computer-readable medium. The dedicated circuitry may include digital and/or analog hardware circuits, and may include integrated circuits (ICs) and/or discrete circuits. The programmable circuitry may include reconfigurable hardware circuits including memory elements such as logic AND, logic OR, logic XOR, logic NAND, logic NOR, and other logic operations, flip-flops, registers, field programmable gate arrays (FPGA), programmable logic arrays (PLA), and the like.

The computer readable medium may include any tangible device capable of storing instructions for execution by a suitable device, so that the computer readable medium having the instructions stored therein will have a product including instructions that can be executed to create means for performing the operations designated in flowcharts or block diagrams. Examples of the computer readable medium may include an electronic storage medium, a magnetic storage medium, an optical storage medium, an electromagnetic storage medium, a semiconductor storage medium, and the like. More specific examples of the computer readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, and the like.

The computer readable instructions may include source code or object code written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk (registered trademark), JAVA (registered trademark), C++, or the like, and conventional procedural programming languages such as the "C" programming language or similar programming languages.

The computer readable instructions may be provided for a processor or programmable circuitry of a general purpose computer, special purpose computer, or other programmable data processing apparatuses locally or via a wide area network (WAN) such as a local area network (LAN), the Internet, or the like, and execute the computer readable instructions to create means for executing the operations designated in flowcharts or block diagrams. Examples of the processor include a computer processor, a processing unit, a microprocessor, a digital signal processor, a controller, a microcontroller, and the like.

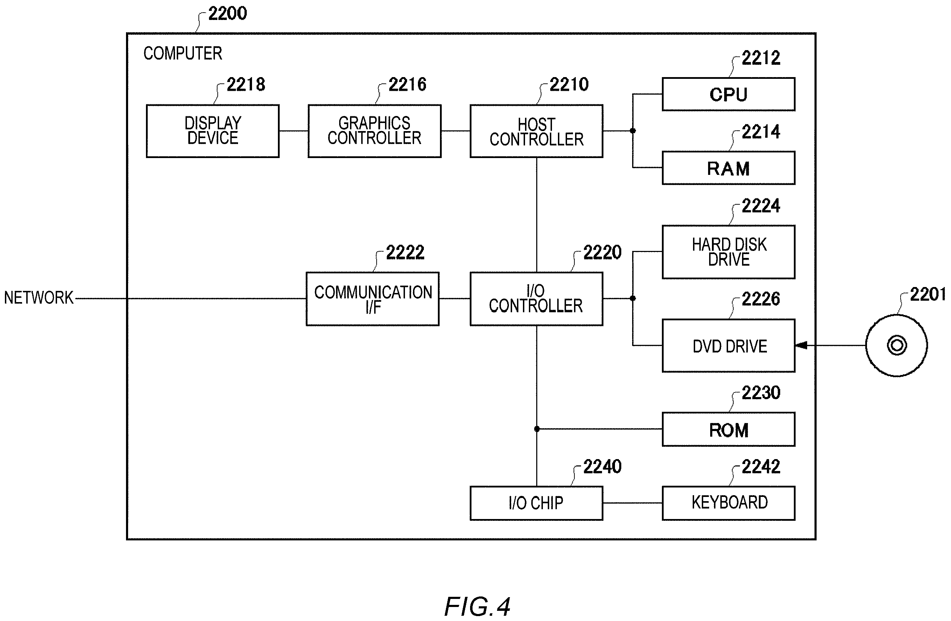

Fig. 4 illustrates an example of a computer 2200 in which a plurality of aspects of the present invention may be embodied in whole or in part. A program installed in the computer 2200 may cause the computer 2200 to function as an operation associated with the apparatuses according to the embodiments of the present invention or as one or more sections of the apparatuses, or may cause the operation or the one or more sections to be executed, and/or may cause the computer 2200 to execute a process according to the embodiments of the present invention or a stage of the process. Such programs may be executed by a CPU 2212 to cause the computer 2200 to perform certain operations associated with some or all of the blocks in the flowcharts and block diagrams described in the present specification.

The computer 2200 according to the present embodiment includes the CPU 2212, a RAM 2214, a graphic controller 2216, and a display device 2218, which are interconnected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as a ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 acquires image data generated by the CPU 2212 in a frame buffer or the like provided in the RAM 2214 or in itself, such that the image data is displayed on the display device 2218.

The communication interface 2222 communicates with other electronic devices via a network. The hard disk drive 2224 stores programs and data used by the CPU 2212 in the computer 2200. The DVD-ROM drive 2226 reads a program or data from the DVD-ROM 2201 and provides the program or data to the hard disk drive 2224 via the RAM 2214. The IC card drive reads programs and data from the IC card, and/or writes programs and data to the IC card.

The ROM 2230 stores therein boot programs and the like executed by the computer 2200 at the time of activation, and/or programs that depend on the hardware of the computer 2200. The input/output chip 2240 may also connect various input/output units to the input/output controller 2220 via parallel ports, serial ports, keyboard ports, mouse ports, or the like.

The program is provided by a computer-readable medium such as the DVD-ROM 2201 or the IC card. The program is read from a computer readable medium, installed in the hard disk drive 2224, the RAM 2214, or the ROM 2230 which are also examples of the computer readable medium, and executed by the CPU 2212. The information processing described in these programs is read by the computer 2200 and provides cooperation between the programs and various types of hardware resources. The apparatus or method may be configured by implementing operations or processing of information according to use of the computer 2200.

For example, in a case where communication is performed between the computer 2200 and an external device, the CPU 2212 may execute a communication program loaded in the RAM 2214 and instruct the communication interface 2222 to perform communication processing on the basis of a process described in the communication program. Under the control of the CPU 2212, the communication interface 2222 reads transmission data stored in a transmission buffer processing area provided in a recording medium such as the RAM 2214, the hard disk drive 2224, the DVD-ROM 2201, or the IC card, transmits the read transmission data to the network, or writes reception data received from the network in a reception buffer processing area or the like provided on the recording medium.

In addition, the CPU 2212 may cause the RAM 2214 to read all or a necessary part of a file or database stored in an external recording medium such as the hard disk drive 2224, the DVD-ROM drive 2226 (DVD-ROM 2201), the IC card, or the like, and may execute various types of processing on data on the RAM 2214. Next, the CPU 2212 writes back the processed data to the external recording medium.

Various types of information such as various types of programs, data, tables, and databases may be stored in a recording medium and subjected to information processing. The CPU 2212 may execute various types of processing on the data read from the RAM 2214, including various types of operations, information processing, conditional determination, conditional branching, unconditional branching, information retrieval/replacement, and the like, which are described throughout the present disclosure and designated by a command sequence of a program, and writes back the results to the RAM 2214. Further, the CPU 2212 may retrieve information in a file, a database, or the like in the recording medium. For example, in a case where a plurality of entries each having the attribute value of a first attribute associated with the attribute value of a second attribute is stored in the recording medium, the CPU 2212 may retrieve the plurality of entries for an entry matching the condition in which the attribute value of the first attribute is designated, read the attribute value of the second attribute stored in the entry, and thereby acquire the attribute value of the second attribute associated with the first attribute satisfying the predefined condition.

The programs or software modules described above may be stored in a computer-readable medium on or near the computer 2200. In addition, a recording medium such as a hard disk or a RAM provided in a server system connected to a dedicated communication network or the Internet can be used as a computer-readable medium, thereby providing a program to the computer 2200 via the network.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### [Other Possible Claims]

### [Item 1]

An apparatus comprising:
an image acquisition unit configured to acquire a captured image;
a compression unit configured to compress the captured image to generate a compressed image;
an evaluation acquisition unit configured to acquire evaluation according to visibility of the compressed image from a user; and
a learning processing unit configured to perform, in response to input of a new captured image, learning processing of a model for outputting a compression parameter value to be applied in compression of the captured image by using learning data including the evaluation, a captured image corresponding to the compressed image targeted for the evaluation, and a compression parameter value applied in generation of the compressed image.

### [Item 2]

The apparatus according to item 1, wherein
the compression unit compresses the captured image for each area to generate the compressed image,
the evaluation acquisition unit acquires the evaluation for at least a partial area of the compressed image, and
the learning processing unit performs, in response to input of a new captured image, learning processing of the model for outputting a compression parameter value to be applied in compression of at least a partial area of the captured image by using learning data including the evaluation for at least a partial area of the compressed image, the at least a partial area targeted for the evaluation in the captured image, and the compression parameter value applied in generation of the at least a partial area.

### [Item 3]

The apparatus according to item 2, wherein
the evaluation acquisition unit acquires the evaluation for an area designated by a user in the compressed image.

### [Item 4]

The apparatus according to any one of items 1 to 3, wherein
the evaluation acquisition unit acquires an operation for enlarging and displaying the compressed image as the evaluation that is negative for at least an enlarged area of the compressed image.

### [Item 5]

The apparatus according to any one of items 1 to 4, wherein
the evaluation acquisition unit acquires an operation for displaying a displayed compressed image again as the evaluation that is negative for the compressed image.

### [Item 6]

The apparatus according to any one of items 1 to 5, wherein
the evaluation acquisition unit acquires the evaluation according to the visibility of the compressed image and smallness of a data amount of the compressed image.

### [Item 7]

The apparatus according to any one of items 1 to 6, wherein
the compression unit sequentially generates the compressed image by changing a compression parameter value.

### [Item 8]

The apparatus according to item 7, wherein
the compression unit increases or decreases the compression parameter value until the evaluation that is negative is obtained by the evaluation acquisition unit.

### [Item 9]

The apparatus according to any one of items 1 to 8, wherein
the compression unit generates a plurality of compressed images different from each other from a same captured image, and
the evaluation acquisition unit acquires a relative evaluation of visibilities among the plurality of compressed images as the evaluation.

### [Item 10]

The apparatus according to any one of items 1 to 9, wherein
the image acquisition unit acquires, as the captured image, an image which is captured under a reference imaging condition and to which an image effect according to another imaging condition different from the reference imaging condition is applied,
the compression unit generates the compressed image by applying an image effect according to the reference imaging condition to the captured image, and
the evaluation acquisition unit acquires the evaluation according to the visibility of the compressed image and a degree of approximation of the compressed image and the image captured under the reference imaging condition.

### [Item 11]

The apparatus according to any one of items 1 to 10, wherein
the learning processing unit performs learning processing of the model such that a compression parameter value to be applied in compression is between a compression parameter value of a compressed image targeted for the evaluation that is positive and a compression parameter value of a compressed image targeted for the evaluation that is negative.

### [Item 12]

The apparatus according to any one of items 1 to 11, wherein
the image acquisition unit acquires captured images from a plurality of cameras,
the evaluation acquisition unit acquires the evaluation for each camera, and
the learning processing unit performs learning processing of the model different for each camera.

### [Item 13]

The apparatus according to item 12, wherein
the learning processing unit uses a learned model for one camera as a model for learning for another camera.

### [Item 14]

The apparatus according to any one of items 1 to 11, wherein
the image acquisition unit acquires captured images from a plurality of cameras, and
the learning processing unit performs learning processing of the model common among the plurality of cameras.

### [Item 15]

The apparatus according to any one of items 1 to 14, wherein
the evaluation acquisition unit acquires the evaluation for each user, and
the learning processing unit performs learning processing of the model different for each user.

### [Item 16]

The apparatus according to item 15, wherein
the learning processing unit uses a learned model for one user as a model for learning for another user.

### [Item 17]

The apparatus according to any one of items 1 to 14, wherein
the learning processing unit performs learning processing of the model common among a plurality of users.

### [Item 18]

The apparatus according to any one of items 1 to 17, further comprising:
a transmission unit configured to transmit the compressed image to a monitoring terminal, wherein
the evaluation acquisition unit acquires the evaluation via the monitoring terminal.

### [Item 19]

The apparatus according to item 18, further comprising:
a supply unit configured to supply a captured image newly acquired by the image acquisition unit to the model on which learning processing has been performed by the learning processing unit, wherein
the compression unit applies a compression parameter value output from the model in response to supply of a new captured image by the supply unit, and generates a compressed image from the new captured image.

### [Item 20]

The apparatus according to item 19, further comprising:
a storage unit configure to store a captured image, wherein
the transmission unit transmits a captured image corresponding to the compressed image to the monitoring terminal in response to acquisition of the evaluation that is negative for the compressed image by the evaluation acquisition unit.

### [Item 21]

The apparatus according to item 20, wherein
the storage unit stores the captured image and the compressed image, and erases the captured image after a period shorter than that of the compressed image has elapsed.

### [Item 22]

The apparatus according to any one of items 19 to 21, wherein
the compression unit generates the compressed image by applying an image effect according to a reference imaging condition to a captured image captured under another imaging condition different from the reference imaging condition, and
the transmission unit transmits the compressed image and identification information indicating the another imaging condition to the monitoring terminal.

### [Item 23]

The apparatus according to any one of items 18 to 22, wherein
the apparatus is a transcoder disposed between a monitoring camera that captures a captured image and the monitoring terminal.

### [Item 24]

A method comprising:
acquiring an image by acquiring a captured image;
compressing the captured image to generate a compressed image;
acquiring evaluation according to visibility of the compressed image from a user; and
learning processing by performing, in response to input of a new captured image, learning processing of a model for outputting a compression parameter value to be applied in compression of the captured image by using learning data including the evaluation, a captured image corresponding to the compressed image targeted for the evaluation, and a compression parameter value applied in generation of the compressed image.

### [Item 25]

A program for causing a computer to function as:
an image acquisition unit configured to acquire a captured image;
a compression unit configured to compress the captured image to generate a compressed image;
an evaluation acquisition unit configured to acquire evaluation according to visibility of the compressed image from a user; and
a learning processing unit configured to perform, in response to input of a new captured image, learning processing of a model for outputting a compression parameter value to be applied in compression of the captured image by using learning data including the evaluation, a captured image corresponding to the compressed image targeted for the evaluation, and a compression parameter value applied in generation of the compressed image.

### EXPLANATION OF REFERENCES

1: security system; 2: monitoring camera; 3: transcoder; 4: monitoring terminal; 10: communication network; 30: image acquisition unit; 31: compression unit; 32: communication unit; 33: learning processing unit; 35: storage unit; 36: supply unit; 40: communication unit; 42: display unit; 43: operation input unit; 320: transmission unit; 321: evaluation acquisition unit; 350: model; 351: image file; 2200: computer; 2201: DVD-ROM; 2210: host controller; 2212: CPU; 2214: RAM; 2216: graphic controller; 2218: display device; 2220: input/output controller; 2222: communication interface; 2224: hard disk drive; 2226: DVD-ROM drive; 2230: ROM; 2240: input/output chip; 2242: keyboard

## Claims

1. An apparatus comprising:
an image acquisition unit configured to acquire a captured image;
a compression unit configured to compress the captured image to generate a compressed image;
an evaluation acquisition unit configured to acquire evaluation according to visibility of the compressed image from a user; and
a learning processing unit configured to perform, in response to input of a new captured image, learning processing of a model for outputting a compression parameter value to be applied in compression of the captured image by using learning data including the evaluation, a captured image corresponding to the compressed image targeted for the evaluation, and a compression parameter value applied in generation of the compressed image.

2. The apparatus according to claim 1, wherein
the compression unit compresses the captured image for each area to generate the compressed image,
the evaluation acquisition unit acquires the evaluation for at least a partial area of the compressed image, and
the learning processing unit performs, in response to input of a new captured image, learning processing of the model for outputting a compression parameter value to be applied in compression of at least a partial area of the captured image by using learning data including the evaluation for at least a partial area of the compressed image, the at least a partial area targeted for the evaluation in the captured image, and the compression parameter value applied in generation of the at least a partial area.

3. The apparatus according to claim 2, wherein
the evaluation acquisition unit acquires the evaluation for an area designated by a user in the compressed image.

4. The apparatus according to any one of claims 1 to 3, wherein
the evaluation acquisition unit acquires an operation for enlarging and displaying the compressed image as the evaluation that is negative for at least an enlarged area of the compressed image.

5. The apparatus according to any one of claims 1 to 4, wherein
the evaluation acquisition unit acquires an operation for displaying a displayed compressed image again as the evaluation that is negative for the compressed image.

6. The apparatus according to any one of claims 1 to 5, wherein
the evaluation acquisition unit acquires the evaluation according to the visibility of the compressed image and smallness of a data amount of the compressed image.

7. The apparatus according to any one of claims 1 to 6, wherein
the compression unit sequentially generates the compressed image by changing a compression parameter value.

8. The apparatus according to any one of claims 1 to 7, wherein
the compression unit generates a plurality of compressed images different from each other from a same captured image, and
the evaluation acquisition unit acquires a relative evaluation of visibilities among the plurality of compressed images as the evaluation.

9. The apparatus according to any one of claims 1 to 8, wherein
the image acquisition unit acquires, as the captured image, an image which is captured under a reference imaging condition and to which an image effect according to another imaging condition different from the reference imaging condition is applied,
the compression unit generates the compressed image by applying an image effect according to the reference imaging condition to the captured image, and
the evaluation acquisition unit acquires the evaluation according to the visibility of the compressed image and a degree of approximation of the compressed image and the image captured under the reference imaging condition.

10. The apparatus according to any one of claims 1 to 9, wherein
the learning processing unit performs learning processing of the model such that a compression parameter value to be applied in compression is between a compression parameter value of a compressed image targeted for the evaluation that is positive and a compression parameter value of a compressed image targeted for the evaluation that is negative.

11. The apparatus according to any one of claims 1 to 10, further comprising:
a transmission unit configured to transmit the compressed image to a monitoring terminal, wherein
the evaluation acquisition unit acquires the evaluation via the monitoring terminal.

12. The apparatus according to claim 11, further comprising:
a supply unit configured to supply a captured image newly acquired by the image acquisition unit to the model on which learning processing has been performed by the learning processing unit, wherein
the compression unit applies a compression parameter value output from the model in response to supply of a new captured image by the supply unit, and generates a compressed image from the new captured image.

13. The apparatus according to claim 12, wherein
the compression unit generates the compressed image by applying an image effect according to a reference imaging condition to a captured image captured under another imaging condition different from the reference imaging condition, and
the transmission unit transmits the compressed image and identification information indicating the another imaging condition to the monitoring terminal.

14. A method comprising:
acquiring an image by acquiring a captured image;
compressing the captured image to generate a compressed image;
acquiring evaluation according to visibility of the compressed image from a user; and
learning processing by performing, in response to input of a new captured image, learning processing of a model for outputting a compression parameter value to be applied in compression of the captured image by using learning data including the evaluation, a captured image corresponding to the compressed image targeted for the evaluation, and a compression parameter value applied in generation of the compressed image.

15. A program for causing a computer to function as:
an image acquisition unit configured to acquire a captured image;
a compression unit configured to compress the captured image to generate a compressed image;
an evaluation acquisition unit configured to acquire evaluation according to visibility of the compressed image from a user; and
a learning processing unit configured to perform, in response to input of a new captured image, learning processing of a model for outputting a compression parameter value to be applied in compression of the captured image by using learning data including the evaluation, a captured image corresponding to the compressed image targeted for the evaluation, and a compression parameter value applied in generation of the compressed image.
